(19) Europäisches Patentamt / European Patent Office / Office européen des brevets

(11) **EP 2 269 755 B1**

(12) **EUROPEAN PATENT SPECIFICATION**

(45) Date of publication and mention
of the grant of the patent:
**25.06.2014 Bulletin 2014/26**

(51) Int Cl.:
***B23H 1/02*** $^{(2006.01)}$

(21) Application number: **10164081.1**

(22) Date of filing: **27.05.2010**

(54) **Wire cut electric discharge machine with machining state discrimination function**

Elektrische Drahterodiermaschine mit Funktion zur Unterscheidung des mechanischen Bearbeitungsstatus

Machine de décharge électrique à coupe-pâte avec fonction de discrimination de l'état d'usinage

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **05.06.2009 JP 2009136605**

(43) Date of publication of application:
**05.01.2011 Bulletin 2011/01**

(73) Proprietor: **FANUC CORPORATION**
**Oshino-mura**
**Minamitsuru-gun**
**Yamanashi 401-0597 (JP)**

(72) Inventors:
- **Murai, Masao**
  **Minamitsuru-gun Yamanashi 401-0597 (JP)**
- **Kawahara, Akiyoshi**
  **Minamitsuru-gun Yamanashi 401-0597 (JP)**
- **Nakashima, Yasuo**
  **Minamitsuru-gun Yamanashi 401-0597 (JP)**
- **Furuta, Tomoyuki**
  **Minamitsuru-gun Yamanashi 401-0597 (JP)**

(74) Representative: **Ward, James Norman**
**Haseltine Lake LLP**
**Lincoln House, 5th Floor**
**300 High Holborn**
**London WC1V 7JH (GB)**

(56) References cited:
**WO-A1-89/11371          US-A- 3 705 286**
**US-A- 5 359 169          US-A1- 2005 127 041**
**US-A1- 2005 145 603**

- **YAN ET AL: "Monitoring and control of the micro wire-EDM process", INTERNATIONAL JOURNAL OF MACHINE TOOL DESIGN AND RESEARCH, PERGAMON PRESS, OXFORD, GB, vol. 47, no. 1, 9 October 2006 (2006-10-09), pages 148-157, XP005878042, ISSN: 0020-7357, DOI: 10.1016/J.IJMACHTOOLS.2006.02.006**
- **A.W. BEHRENS ET AL: "Threshold technology and its application for gap status detection", JOURNAL OF MATERIALS PROCESSING TECHNOLOGY, vol. 149, no. 1-3, 1 June 2004 (2004-06-01), pages 310-315, XP55036623, ISSN: 0924-0136, DOI: 10.1016/j.jmatprotec.2003.10.041**

**Description**

(Field of the Invention)

The present invention relates to a wire cut electric discharge machine. More particularly, the invention relates to a wire cut electric discharge machine with a machining state discrimination function.

Description of the Related Art

In electric discharge machining, a voltage is applied to an electrode and a workpiece in a machining fluid to generate an arc discharge. The workpiece is melted by heat of the electric discharge, and, at the same time, the machining fluid is rapidly heated to cause vaporizing explosion, and to blow the melted workpiece. This operation is frequently repeated, whereby the machining of the workpiece is progressed. Since small discharge craters generated by electric discharge gather to form a machined surface, the sizes of the respective discharge craters determine the surface roughness.

In wire cut discharge machining as a kind of the electric discharge machining, there has been known that an AC high-frequency voltage which is a power supply output voltage is applied to between a wire electrode and a workpiece (a machining gap), and electric discharge having a short time width is frequently repeated, whereby a finely machined surface can be obtained.

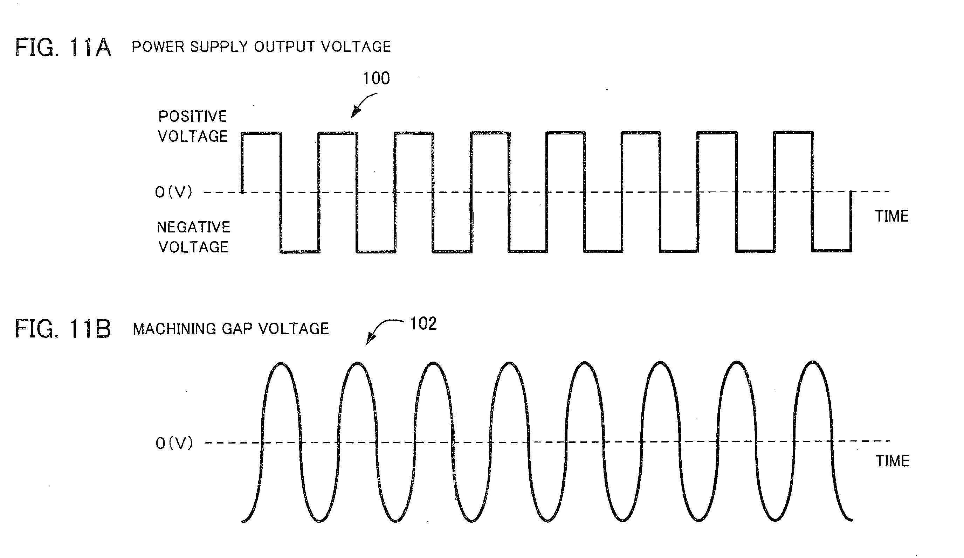

FIG. 11A shows an example of the AC high-frequency voltage generated by a power supply of a wire cut electric discharge machine. A power supply repeatedly outputs as a power supply output voltage 100 a positive voltage and a negative voltage with a predetermined frequency. A rectangular wave which is the power supply output voltage 100 generated by the power supply passes through a wiring cable in a section to the machining gap, whereby the machining gap is subjected to application of the rectangular wave serving as a voltage 102 having a waveform of a blunt sinusoidal wave shape as shown in FIG. 11B.

For example, Japanese Patent Application Laid-Open No. 61-260915 discloses that a workpiece is machined with an AC high-frequency voltage of 1 to 5 MHz, whereby a machined surface with a surface roughness of not more than 1 $\mu$mRmax is obtained.

In the wire cut electric discharge machine, in general, an average voltage of the machining gap is measured to determine the machining state, and the feed speed of the wire electrode is controlled, or the machining conditions are changed and controlled. However, when the AC high-frequency voltage is not less than several MHz, a rectifier circuit for use in acquisition of the average voltage does not respond, and therefore there is a problem that measurement error is increased.

Moreover, for high frequencies, a so-called "resonance phenomenon" often occurs between a machining power supply and the machining gap. When a discharge gap length, a workpiece thickness, the state of the flow of the machining fluid, and so on are changed, an electric constant of the machining gap is changed, and a variation of the machining voltage is unavoidable. Thus, it becomes more difficult to determine the machining state from the average voltage.

In a finish machining using the AC high-frequency voltage, a measurement circuit does not respond well, and therefore it is hard to accurately measure the average voltage. Even when the average voltage can be measured, the average voltage may be varied due to the influence of the "resonance phenomenon", and thus it is difficult to determine the machining state from the average voltage. Therefore, it is hard to discriminate the machining state and perform feedback control, and thus the feed rate of the wire electrode should be kept constant. This hinders improvement of machining accuracy.

In order to solve the above problem, International Publication No. W2004/022275 which can be considered the closest state of the art discloses a technique of applying the AC high-frequency voltage superimposed with a DC voltage, extracting only a low-frequency voltage component of the machining gap voltage by means of a low-pass filter, and controlling the feed of an electrode in accordance with the change of the voltage component. In this technique, since the average voltage does not become zero, electrolytic corrosion of a workpiece and a machine bodymay occur. Moreover, due to the use of the low-pass filter, when a discharge state is rapidly changed, response is deteriorated, and following up is impossible. When the flow of a machining fluid in the machining gap and the concentration of machining sludge are changed, even if the discharge state is not changed, the impedance of the machining gap may be changed to vary the average voltage. Therefore, the average voltage may not correctly reflect the machining state including a discharge frequency.

Meanwhile, Japanese Patent Application Laid-Open No. 2002-254250 discloses a technique of detecting the number of times of discharge per unit time and controlling the feed speed of an electrode, an off time, and the strength of a machining fluid. Namely, the average voltage is not used as a discharge characteristic value. This technique uses as the discharge characteristic value the number of times of discharge, instead of the average voltage. Although relative to the average voltage the number of times of discharge is an index that is less likely to be affected by disturbances such as the density of machining sludge and a specific resistance of a machining fluid, it is hard to detect a discharge at AC high-frequency waves, and the number of times of discharge cannot be used in the finish machining.

As described above, when machining is performed at the AC high-frequency voltage in the electric discharge machine, it is hard to discriminate the machining state in detail. Thus, there is room for significant improvement in terms of machining accuracy.

(Contents of the Invention)

In view of the above prior art problems, an object of the present invention is to provide a wire cut electric discharge machine which classifies and discriminates machining gap states for each voltage application and can determine a machining state.

A wire cut electric discharge machine according to the present invention is defined in claim 1. Preferred features are defined in the dependent claims.

The wire cut electric discharge machine according to the present invention, which can determine the machining state, applies a high-frequency voltage to a machining gap between a wire electrode and a workpiece, disposed at a predetermined interval from the wire electrode, to produce discharge, and to machine the workpiece. The machine includes voltage application means and machining gap voltage detection means. The application means applies a bipolar voltage, having both positive and negative polarities, to the machining gap with a period of not more than 1 microsecond so that an off time of at least not less than the application time is provided between individual voltage applications. The machining gap voltage detection means detects a machining gap voltage generated in the machining gap.

In the first aspect of the wire cut electric discharge machine according to the present invention, the machine includes three-state discrimination signal output means and counting means. Based on the machining gap voltage detected by the machining gap voltage detection means, the three-state discrimination signal output means classifies machining states into three states of "open", "discharge", and "short" for each voltage application performed by the voltage application means and outputs a state discrimination signal corresponding to each of the states. The counting means counts each of the state discrimination signals output from the three-state discrimination signal output means to obtain state discrimination data.

The three-state discrimination signal output means may have a discrimination level whose absolute value is not more than a no-load voltage and not less than an arc voltage. In the timing of starting the voltage application to the machining gap, (1) the three-state discrimination signal output means outputs an open" signal when the absolute value of the machining gap voltage is not less than the discrimination level, (2) the three-state discrimination signal output means outputs a "short" signal when the absolute value has never exceeded the discrimination level since the start of the last voltage application, and (3) the three-state discrimination signal output means outputs a "discharge" signal in cases not corresponding to any of the above cases (1) and (2).

At least one value of the state discrimination data obtained by the counting means and a previously-set reference value may be compared with each other, and at least one of the feed speed of the wire electrode, the length of the off time, the flow rate of a machining fluid, and a positive and negative power supply voltage set value of the voltage application means may be changed.

In the second aspect of the wire cut electric discharge machine according to the present invention, the machine includes four-state discrimination signal output means and counting means. Based on the machining gap voltage detected by the machining gap voltage detection means, the four-state discrimination signal output means classifies machining states into four states of "open", "discharge", "immediate discharge", and "short" for each voltage application performed by the voltage application means and outputs a state discrimination signal corresponding to each of the states. The counting means counts each of the state discrimination signals output from the four-state discrimination signal output means to obtain state discrimination data.

The four-state discrimination signal output means may have two discrimination levels including high and low levels whose absolute value is not more than a no-load voltage and not less than an arc voltage. In the timing of starting the voltage application to the machining gap, (1) the four-state discrimination signal output means outputs an "open" signal when the absolute value of the machining gap voltage is not less than the high level, (2) the four-state discrimination signal output means outputs a "short" signal when the absolute value has never exceeded the low level since the start of the last voltage application, (3) the four-state discrimination signal output means outputs a "discharge" signal when the absolute value has once exceeded the high level and is not more than the low level at the time of the next voltage application since the start of the last voltage application, and (4) the four-state discrimination signal output means outputs an "immediate discharge" signal in cases not corresponding to any of the above cases (1) to (3).

At least one value of the state discrimination data obtained by the counting means and a previously-set reference value may be compared with each other, and at least one of the feed speed of the wire electrode, the length of the off time, the flow rate of a machining fluid, and a positive and negative power supply voltage set value of the voltage application means may be changed.

In the third aspect of the wire cut electric discharge machine according to the present invention, the machine includes five-state discrimination signal output means and counting means. Based on the machining gap voltage detected by the machining gap voltage detection means, the five-state discrimination signal output means classifies machining states into five states of "open", "leakage", "discharge", "immediate discharge", and "short" for each voltage application performed by the voltage application means and outputs a state discrimination signal corresponding to each of the states. The counting means counts each of the state discrimination signals output from the five-state discrimination signal output means to obtain state discrimination data.

The five-state discrimination signal output means may have two discrimination levels including high and low levels whose absolute value is not more than a no-load voltage and not less than an arc voltage. In the timing of starting the voltage application to the machining gap, (1) the five-state discrimination signal output means outputs an "open" signal when the absolute value of the machining gap voltage is not less than the high level, (2) the five-state discrimination signal output means outputs a "leakage" signal when the machining gap voltage is not more than the high level and not less than the low level, (3) the five-state discrimination signal output means outputs a "short" signal when the absolute value has never exceeded the low level since the start of the last voltage application, (4) the four-state discrimination signal output means outputs a "discharge" signal when the absolute value has once exceeded the high level and is not more than the low level at the time of the next voltage application since the start of the last voltage application, and (5) the four-state discrimination signal output means outputs an "immediate discharge" signal in cases not corresponding to any of the above cases (1) to (4).

At least one value of the state discrimination data obtained by the counting means and a previously-set reference value may be compared with each other, and at least one of the feed speed of the wire electrode, the length of the off time, the flow rate of a machining fluid, and a positive and negative power supply voltage set value of the voltage application means may be changed.

The present invention can provide a wire cut electric discharge machine which classifies and discriminates machining gap states for each voltage application and can determine a machining state.

(Description of the Drawings)

FIG. 1 shows an example of a bipolar voltage application circuit used in an embodiment of a wire cut electric discharge machine according to the present invention;

FIG. 2A shows a power supply output voltage in the case where a DC power supply of the bipolar voltage application circuit of FIG. 1 is switched, whereby a bipolar AC voltage is applied to a machining gap between a wire electrode and a workpiece;

FIG. 2B shows a view showing that the voltage of the machining gap has a trapezoidal wave shape by virtue of the power supply output voltage shown in FIG. 2A;

FIG. 3A shows a machining gap voltage which is a machining gap voltage of a trapezoidal wave shaped voltage, used in an embodiment of the wire cut electric discharge machine with a machining state discrimination function, and is a machining gap voltage upon the occurrence of discharge;

FIG. 3B shows a machining gap voltage which is a machining gap voltage of an AC high-frequencyvoltage shown in FIG. 11B and is a machining gap voltage upon the occurrence of discharge;

FIG. 4 is a view for explaining one embodiment of the wire cut electric discharge machine with three-state discrimination signal output means;

FIG. 5 is a timing chart showing the operation of the three-state discrimination signal output means shown in FIG. 4;

FIG. 6 is a view for explaining one embodiment of the wire cut electric discharge machine with four-state discrimination signal output means;

FIGS. 7A and 7B are timing charts showing the operation of the four-state discrimination signal output means shown in FIG. 6;

FIG. 8 is a view for explaining one embodiment of the wire cut electric discharge machine with five-state discrimination signal output means;

FIGS. 9A and 9B are timing charts showing the operation of the five-state discrimination signal output means shown in FIG. 8;

FIG. 10 is a block diagram of the relevant portion of a controller of the wire cut electric discharge machine in one embodiment of the present invention;

FIG. 11A is a view showing an example of the AC high-frequency voltage generated by a power supply of the prior art wire cut electric discharge machine and including positive and negative voltages repeated with a predetermined frequency; and

FIG. 11B is a view showing that the voltage of the machining gap has a waveform of a blunt sinusoidal wave shape by virtue of the power supply output voltage shown in FIG. 11A.

(Detailed Description of the Invention)

The present invention is **characterized in that** an off time of at least not less than a voltage application time is provided between applications of a bipolar voltage having positive and negative polarities, and machining is performed so that a voltage waveform has a trapezoidal wave shape. The present invention is further **characterized in that** states of a machining gap are classified into some categories for each voltage application, whereby a machining state is recognized without depending on an average voltage.

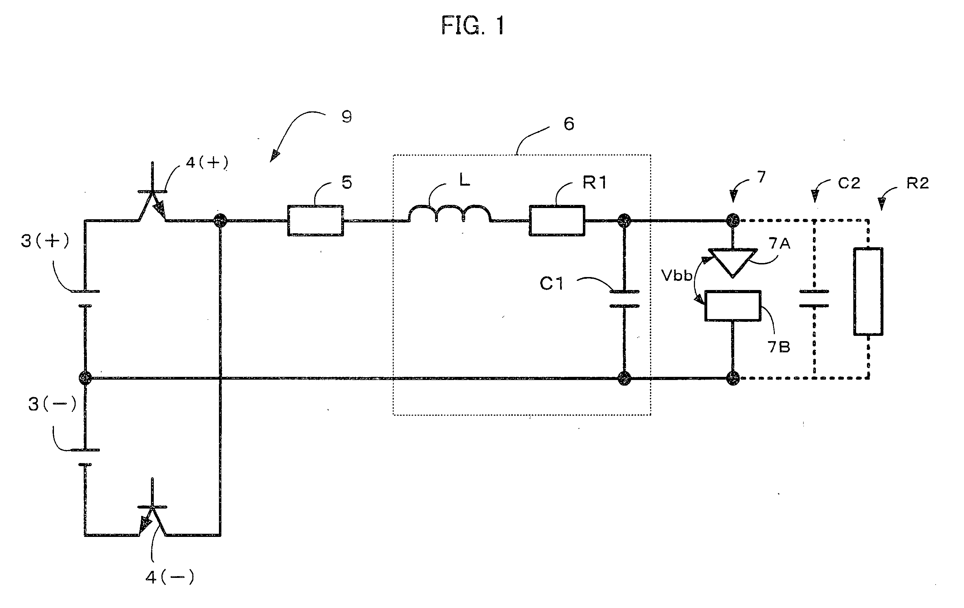

An example of a bipolar voltage application circuit used in an embodiment of the present invention is shown in FIG. 1.

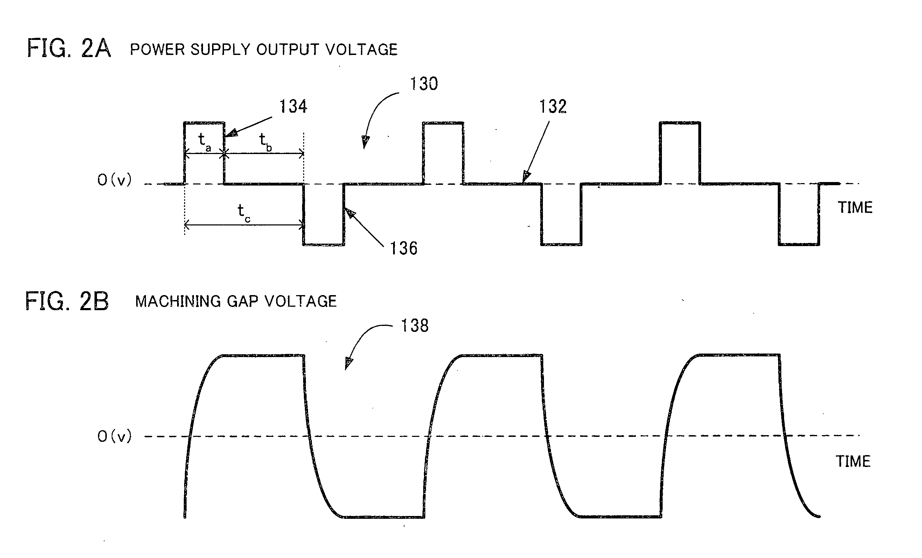

A bipolar voltage application circuit 9 includes a pair of DC power supplies 3, a pair of switching elements 4, a damping resistance 5, and a feed cable 6. Reference symbols 7A and 7B denote a wire electrode and a workpiece, respectively. The workpiece 7B is disposed with a predetermined distance from the wire electrode 7A, and a machining gap 7 is formed between the wire electrode 7A and the workpiece 7B. The pair of switching elements 4 shown by 4 (+) and 4 (-) in FIG. 1 is on/off controlled by a control circuit (not shown) to switch the DC power supplies 3 shown by 3 (+) and 3 (-) in FIG. 1, whereby a bipolar AC voltage is applied to the machining gap 7 (see, FIG. 2A).

The feed cable 6 in the bipolar voltage application circuit 9 includes an inductance L, a resistance R, and a line-to-line capacitance C1 as physical quantities. The machining gap 7 includes a stray capacitance C2 and a leakage resistance R2 as physical quantities, and the stray capacitance C2 and the leakage resistance R2 exist between the opposed surfaces of the electrode 7A and the workpiece 7B. Since a high peak machining current with sharp rising edge is advantageous to rough machining, the bipolar voltage application circuit 9 is constituted so that the impedance of the entire circuit is kept as low as possible. Consequently, although the inductance L and the resistance R are small, the line-to-line capacitance C1 is increased. Therefore, when the energy output from the power supply is reduced to improve surface roughness like finishing, it is difficult to drive the stray capacitance C2 at high speed. When the line-to-line capacitance C1 is also taken into account, a frequency of an AC high-frequency voltage which can be applied to the machining gap 7 is limited to about 200 to 300 kHz.

Thus, in finish machining, by switching to the feed cable 6 with the small line-to-line capacitance C1 or by improving circuit design in a manner such that the stray capacitance C2 of the machining gap 7 is kept as low as possible, the bipolar voltage application circuit 9 is configured so that the AC high-frequency voltage of not less than 500 kHz can be applied in general.

In the bipolar voltage application circuit 9 configured to be used in the finish machining, when positive and negative voltages are applied to the machining gap 7 while an off time is provided between the application of the positive and negative voltages, charge is first accumulated in the line-to-line capacitance C1 and the stray capacitance C2 during the application of the voltage, and a machining gap voltage Vbb of the machining gap 7 is increased. Thereafter, after entering the off period, the application of the voltage is stopped, whereby the charge accumulated in the line-to-line capacitance C1 and the stray capacitance C2 is discharged through the leakage resistance R2 to gradually reduce the voltage. However, as in the present invention, when the voltage application period is short and not more than 1 microsecond, an off time is relatively short, and thus the voltage drop during the off period is small and can be almost ignored.

Further, when the damping resistance 5 is inserted in series into a circuit to thereby prevent occurrence of vibration due to the application of voltage and a transient state of off, the machining gap voltage Vbb can have an almost trapezoidal wave shape (see, FIG. 2B). The higher the resistance value R of the damping resistance 5, the larger the vibration suppression effect; however, when the resistance value R is increased, the change rate of a voltage is reduced, whereby the waveform is blunted.

Thus, in the bipolar voltage application circuit 9 (see, FIG. 1), if the resistance value R of the damping resistance is set as follows, for attaining a critical condition,

$$R = \sqrt{(L/C)}$$

where L is circuit inductance of, for example, a feed cable, and C is the sum of the line-to-line capacitance C1 of the feed cable and the stray capacitance C2 of the machining gap, then the fastest response can be obtained while suppressing the vibration. However, when a thickness of a workpiece or a discharge gap length is changed during machining, the stray capacitance C2 in the machining gap 7 is also changed. Therefore, although it is difficult to always satisfy the critical condition, a slight deviation would not cause any significant influence on the machining properties even if the waveform is slightly vibrated, and thus there is no practical problem.

A power supply output voltage and a machining gap voltage upon switching the DC power supply 3 in the bipolar voltage application circuit 9 of FIG. 1 will be described using FIGS. 2A and 2B.

In a power supply output voltage 130 shown in FIG. 2A, a positive voltage 134 and a negative voltage 136 are alternately output, and an off time 132 is provided after each output of the positive voltage 134 and the negative voltage 136. The length of time to apply the positive voltage 134 and the negative voltage 136 is represented by ta, and the length of the off time is represented by tb. ta + tb = tc represents one period and is equal to the time from the application of the positive voltage to the application of the negative voltage.

By virtue of the power supply output voltage 130 shown in FIG. 2A, the machining gap voltage between the wire electrode and the workpiece becomes a trapezoidal wave shaped voltage 138 shown in FIG. 2B.

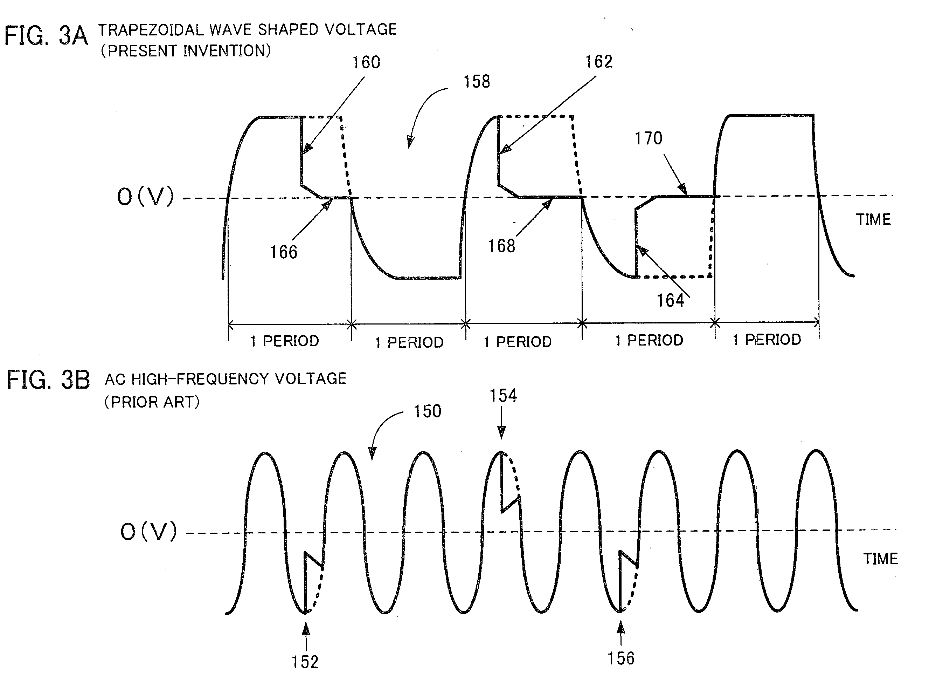

Next, the voltage change in a machining gap upon the occurrence of discharge in the machining gap will be described using FIGS. 3A and 3B.

FIG. 3A shows the machining gap voltage Vbb of a trapezoidal wave shaped voltage 158 used in the present embodiment. The machining gap voltages 166, 168, and 170 upon the occurrence of discharge are shown in FIG. 3A.

FIG. 3B shows the machining gap voltage Vbb of an AC high-frequency voltage 150 (used conventionally) shown in FIG. 11B. The machining gap voltages 152, 154, and 156 upon the occurrence of discharge are shown in FIG. 3B.

When the voltage is applied to the gap, the electrostatic attraction force acts between the wire electrode and the workpiece. And so, the wire electrode is bend toward the workpiece by the force, which degrades straightness accuracy. In general, the electrostatic attraction force is proportional to the square of the average gap voltage.

In the machining gap voltage Vbb of the trapezoidal wave shaped voltage 158 shown in FIG. 3A, compared with the machining gap voltage Vbb of the AC high-frequency voltage 150 shown in FIG. 3B, voltage reduction per one discharge is larger. Moreover, as a discharge frequency is increased, the electrostatic attraction force of the wire electrode is rapidly reduced, and straightness accuracy is improved. The off times 166, 168, and 170 are reliably provided between individual discharges in the trapezoidal wave shaped voltage 158, whereby a discharge arc is reliably extinguished, and thus individual discharge positions are dispersed to hardly cause discharge concentration. If the concentration of the discharge points occurs, the surface roughness may be degraded.

In the usual AC high-frequency voltage used in the prior art (see, FIGS. 11B and 3B), since an instantaneous value of the machining gap voltage Vbb is always changed, it is very difficult to determine the presence of discharge or the machining state from the change of voltage. In general, discharge often occurs near the peak value of the machining gap voltage Vbb. Although the machining gap voltage Vbb drops near the arc voltage at once due to discharge, after the peak of voltage, the voltage drops without discharge. Therefore, if the occurrence of discharge is slightly delayed, the difference between the voltage when discharge occurs and the voltage when discharge does not occur is reduced. Moreover, since the voltage changes at high speed, a slight deviation of determination timing may cause erroneous determination. Therefore, when the frequency is high in an AC high-frequency wave, it becomes virtually impossible to detect

discharge and to specifically discriminate a state.

Meanwhile, as in a trapezoidal wave shaped voltage used in the present embodiment (see, FIGS. 2B and 3A), when the voltage application period is not more than 1 microsecond, after the power supply is turned off, a substantial amount of charge still remains in the stray capacitance C2 of the machining gap 7 before the next application of voltage. Therefore, if no discharge occurs, the machining gap voltage Vbb is maintained at approximately the peak value. Meanwhile, if discharge occurs, the machining gap voltage Vbb is maintained at not more than the arc voltage before the next voltage application. Therefore, a voltage change accompanying a change of the machining state is clear, and the change of the machining state can be accurately grasped by observing the machining gap voltage Vbb in the timing of starting the voltage application.

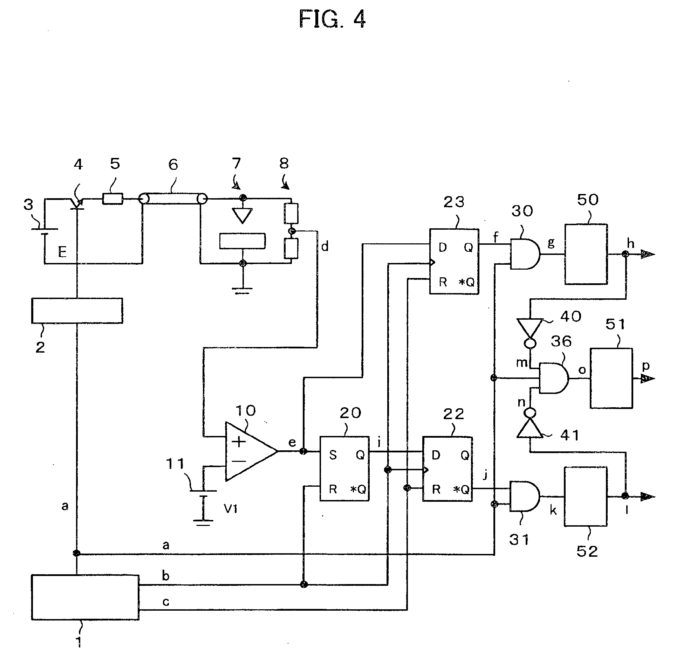

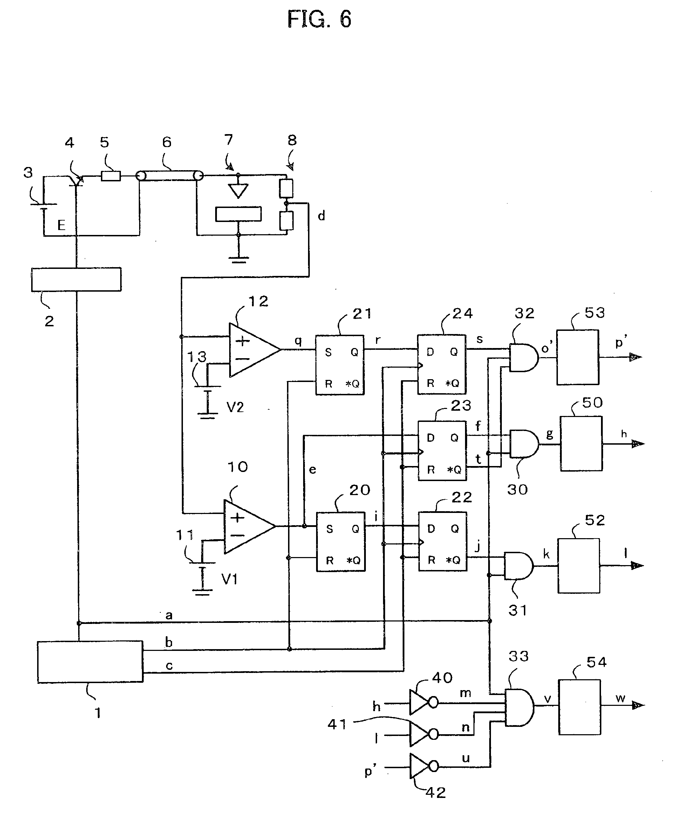

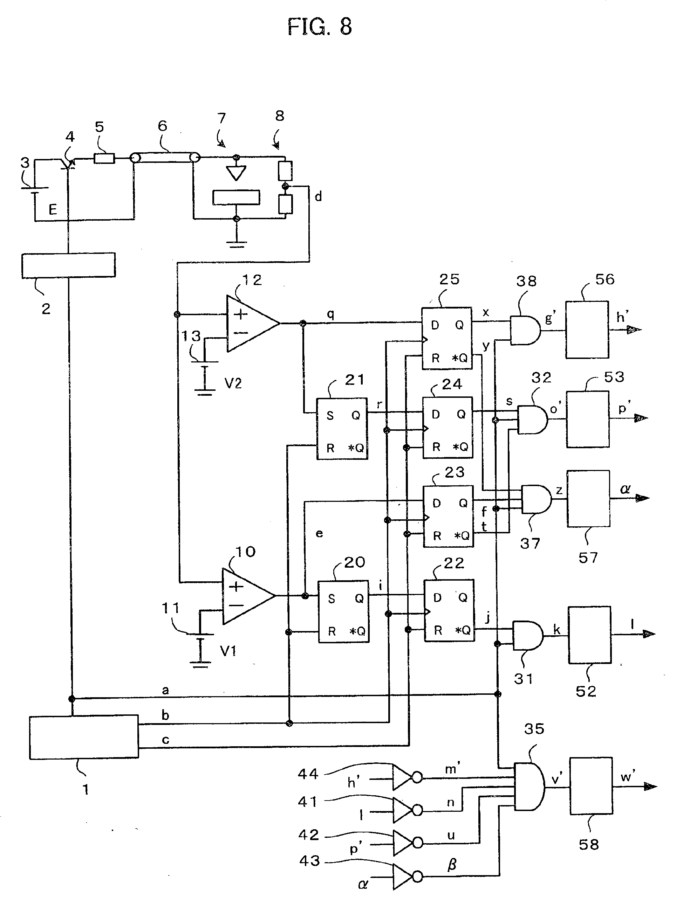

Hereinafter, means that determines the change of the machining state and is used in the embodiment of the present invention will be described. This means that determines the change of the machining state includes three-state discrimination signal output means (see, FIG. 4), four-state discrimination signal output means (see, FIG. 6), and five-state discrimination signal output means (see, FIG. 8).

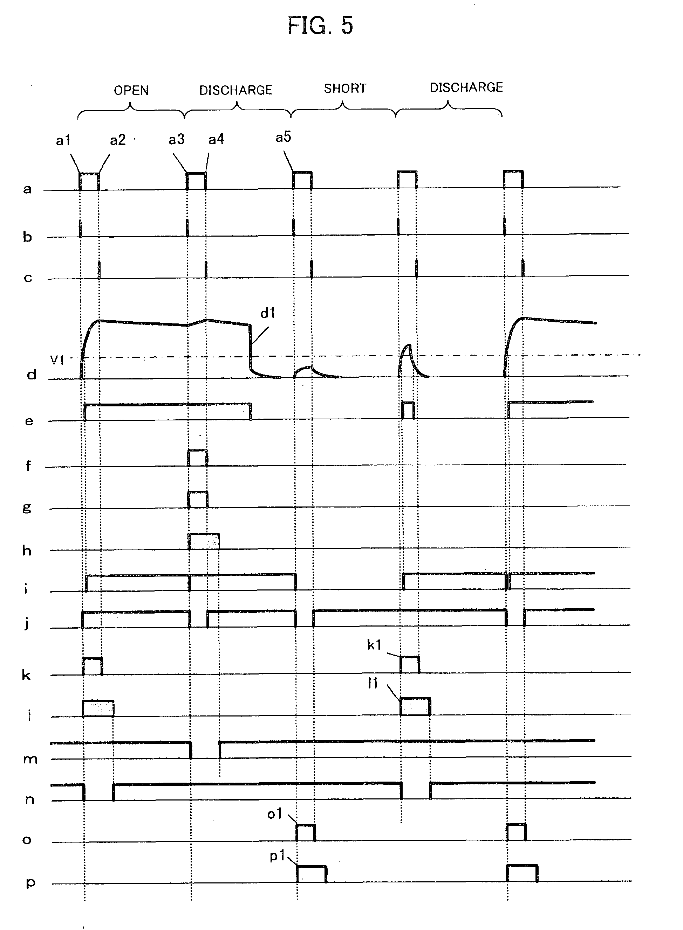

First, the three-state discrimination signal output means will be described with reference to FIGS. 4 and 5.

FIG. 4 is a view for explaining an embodiment of a wire cut electric discharge machine with the three-state discrimination signal output means. FIG. 5 is a timing chart showing the operation of the three-state discrimination signal output means shown in FIG. 4.

The three-state discrimination signal output means shown in FIG. 4 classifies the machining states into three states of "open", "discharge", and "short" and is constituted of a comparator 10, an SR latch 20, first and second D latches 22 and 23, and first, second, and third monostable multi-vibrators 50, 51, and 52. The comparator 10, the SR latch 20, the first and second D latches 22 and 23, and the first, second, and third monostable multi-vibrators 50, 51, and 52 are generally used in electronic circuit technology and well-known. For simplification of description, only the case of positive voltage application will be described; however, also in the case of negative voltage application, similar effects can be obtained by a similar constitution just by changing signs.

As shown in FIG. 4, a voltage application timing generator 1 is a circuit that outputs a voltage application instruction 'a' for use in the driving of a driver circuit 2 that controls ON/OFF of a switching element 4, outputs a latch instruction 'b' to the SR latch 20 and the D latch circuits 22 and 23 to be described later, and outputs a reset instruction 'c' to the D latch circuits 22 and 23.

The voltage application instruction 'a' is output from the voltage application timing generator 1 to drive the switching element 4 through the driver circuit 2, and to apply a voltage to the machining gap 7. The machining gap voltage Vbb is divided into predetermined voltages by a voltage divider 8 to be input to the first comparator 10. A reference voltage V1 of the first comparator 10 is set to be not less than the arc voltage and not more than a power supply voltage E of the DC power supply 3. Specifically, since the machining gap voltage Vbb is divided into the predetermined voltages by the voltage divider 8, the reference voltage V1 is set based on the values of the arc voltage and the DC power supply 3 corresponding to the division ratio. An output terminal of the first comparator circuit 10 is connected to an S terminal of the first SR latch 20 and a D terminal of the second D latch 23.

The first D latch 22 receives an output signal 'i' from a Q terminal of the first SR latch 20, the latch instruction 'b' and the reset instruction 'c' from the voltage application timing generator 1. The second D latch 23 receives an output signal 'e' from the first comparator 10, the latch instruction 'b', and the reset instruction 'c'.

A first AND gate 30 receives an output signal 'f' from the second D latch 23 and the voltage application instruction 'a' from the voltage application timing generator 1, and a second AND gate 31 receives an output signal 'j' from the first D latch 22 and the voltage application instruction 'a' from the voltage application timing generator 1.

The first monostable multi-vibrator 50 receives an output signal 'g' from the first AND gate 30 and outputs an output signal 'h' from the first monostable multi-vibrator 50. The third monostable multi-vibrator 52 receives an output signal 'k' from the second AND gate 31 and outputs an output signal 'l' from the third monostable multi-vibrator52 . The output signals 'h' and 'l' respectively from the first and third monostable multi-vibrators 50 and 52 are respectively input to first and second inverters 40 and 41. The output signals 'h' and 'l' are inverted respectively by the first and second inverters 40 and 41, and then output signals 'm' and 'n' as inversion signals are output from the first and second inverters 40 and 41. The output signals 'm' and 'n' and the voltage application instruction 'a' are input to a three-input AND gate 36, and an output signal 'o' from the three-input AND gate 36 is input to the second monostable multi-vibrator 51. The second monostable multi-vibrator 51 outputs an output signal 'p'.

The output signal 'h' is used as a signal (that is, an open signal 'h') for use in the determination of whether or not the machining gap 7 is in an open state. The output signal 'p' is used as a signal (that is, a discharge signal 'p') for use in the determination of whether or not the machining gap 7 is in a discharge state. The output signal 'l' isusedasasignal (that is, a short signal 'l') for use in the determination of whether or not the machining gap 7 is in a short state. The open signal 'h', the discharge signal 'p', and the short signal 'l' are counted by a counting circuit (not shown).

Next, the operation of three-state discrimination signal output means will be described using FIGS. 4 and 5.

As shown in a signal waveform 'a' of FIG. 5, when the voltage application timing generator 1 outputs the voltage application instruction 'a', the driver circuit 2 is driven to control ON/OFF of the switching element 4 (see, 'a1'). When the switching element 4 is turned on by the voltage application instruction 'a' through the driver circuit 2, the machining gap voltage Vbb is increased by the DC power supply 3.

When the output signal 'd' of the voltage divider 8 is more than the reference voltage V1 of the first comparator 10, the output signal 'e' of the first comparator 10 is changed from low level to high level. The first SR latch 20 is then set with the output signal 'e'. Consequently, a Q output 'i' of the first SR latch 20 is changed from low level to high level. The low and high levels respectively mean low and high potentials in an operating voltage of an electronic circuit.

If the voltage application instruction 'a' of the voltage application timing generator 1 is returned to OFF (see, 'a2'), the charge accumulated in the stray capacitance C2 of the machining gap 7 remains. Therefore, the machining gap voltage Vbb is gradually reduced as long as no discharge occurs in the machining gap 7, and the output signals 'd', 'e', and 'i' are not changed.

Thereafter, the latch instruction 'b' is output from the voltage application timing generator 1 to the first SR latch 20, the first D latch 22, and the second D latch 23 immediately before the next voltage application instruction 'a' (see, 'a3'). The latch instruction 'b' is input to a reset terminal of the first SR latch 20, a CK terminal of the first D latch 22, and a CK terminal of the second D latch 23. According to this constitution, the output 'e' of the first comparator 10 is held in the second D latch 23, and the output 'i' of the first SR latch 20 is held in the first D latch 22. Moreover, the output signal 'j' of a *Q terminal of the first D latch 22 is changed from high level to low level, and, at the same time, the first SR latch 20 is reset. Although the output 'i' of the first SR latch 20 is temporarily dropped to a low level, the output 'e' of the first comparator 10 is kept in a high level state, and therefore the output 'i' of the first SR latch 20 is immediately set to return to a high level.

The next moment, when the voltage application instruction 'a' of the voltage application timing generator 1 reaches a high level (see, 'a3'), the output 'f' of the second D latch 23 is also high level. Therefore, the output 'g' of the first AND gate 30 is also high level to trigger the first monostable multi-vibrator 50, and to output the open signal 'h'. Meanwhile, since the output signal 'j' of the *Q terminal of the first D latch 22 is low level, the output signal 'k' of the second AND gate 31 is held at a low level, and the short signal 'l' is not output from the third monostable multi-vibrator 52 (namely, the short signal 'l' is held at a low level).

Since the open signal 'h' from the secondmonostable multi-vibrator 51 reaches a high level, the input 'm' of the three-input AND gate 36 is dropped to a low level. The output 'o' is held at a low level. The second monostable multi-vibrator 51 is thus not triggered, and the discharge signal 'p' is not output from the second monostable multi-vibrator 51.

The reset instruction 'c' is then output simultaneously with OFF of the voltage application instruction 'a' from the voltage application timing generator 1 (see, 'a4'), and the first and second D latches 22 and 23 are reset. The output 'j' of the *Q terminal of the first D latch 22 is returned to a high level, and the output 'f' of the Q terminal of the second D latch 23 is returned to a low level.

Subsequently, when discharge occurs in the machining gap 7, the machining gap voltage Vbb drops near the arc voltage at once (see, 'd1'), and the output 'e' of the first comparator 10 is returned to a low level. At that time, since the switching element 4 is already turned off, the voltage does not increase even if the discharge is terminated, and the machining gap voltage Vbb is kept at not more than the arc voltage.

Thereafter, when the latch instruction 'b' is output immediately before the next voltage application instruction 'a' from the voltage application timing generator 1 (see, 'a5'), the output 'e' of the first comparator 10 is low level, and therefore, the Q output 'f' of the second D latch 23 is also low level. Meanwhile, since the output 'i' of the first SR latch 20 is held at a high level, the output signal 'j' of the *Q terminal of the first D latch 22 is dropped to a low level as in the previous time.

When the voltage application instruction 'a' then reaches a high level (see, 'a5'), the output signal 'f' of the Q terminal of the second D latch 23 and the output signal 'j' of the *Q terminal of the first D latch 22 are low level this time. Therefore, since the output 'g' of the first AND gate 30 and the output signal 'k' of the second AND gate 31 are low level, the open signal 'h' from the first monostable multi-vibrator 50 and the short signal 'l' from the third monostable multi-vibrator 52 are not output.

On the other hand, the open signal 'h' and the short signal 'l' are input respectively to the inverters 40 and 41. Therefore, the inversion signals 'm' and 'n' are high level, and the voltage application instruction 'a' is high level. Thus, the output signal 'o' of the three-input AND gate 36 is high level to trigger the second monostable multi-vibrator 51, and to output the discharge signal 'p'.

Subsequently, the machining gap 7 is in a short state, and when the output 'd' of the voltage divider 8 is less than the reference voltage V1 of the first comparator 10, the first SR latch 20 is not set, and the output signal 'i' is held at a low level. In that case, the output 'j' of the *Q terminal of the first D latch 22 is held at a high level and is not changed. Moreover, since the output signal 'f' of the Q terminal of the second D latch 23 is low level, only the output 'k' of the second AND gate 31 is high level (see, 'k1'), and the short signal 'l' is output from the third monostable multi-vibrator 52 (see, 'l1').

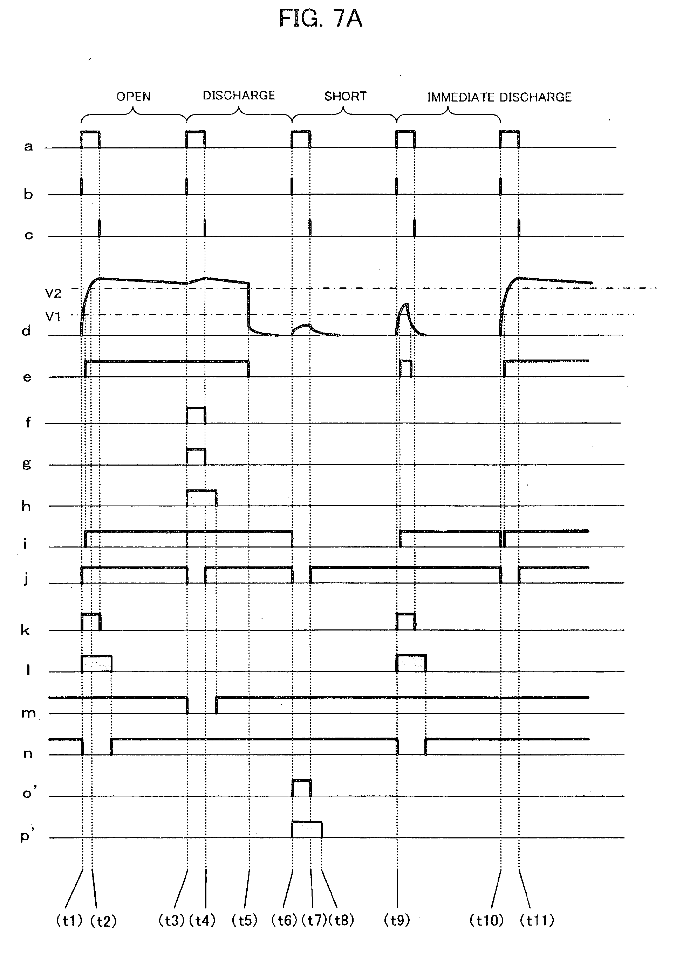

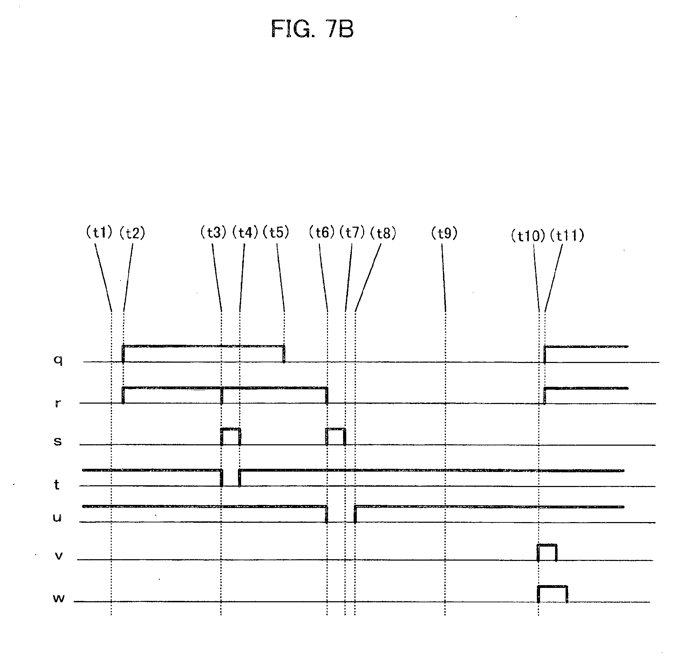

Next, four-state discrimination signal output means will be described with reference to FIGS. 6, 7A, and 7B.

FIG. 6 is a view for explaining an embodiment of a wire cut electric discharge machine with the four-state discrimination signal outputmeans. FIGS. 7A and 7B are timing charts showing the operation of the four-state discrimination signal output means shown in FIG. 6.

Regarding the three states of "open", "discharge", and "short" obtained by the classification by the three-state discrimination signal output means shown in FIG. 4, the four-state discrimination signal output means shown in FIG. 6 classifies the "discharge" state in more detail into "discharge" and "immediate discharge", whereby the entire machining state is classified into four states of "open", "discharge", "immediate discharge", and "short".

The four-state discrimination signal output means shown in FIG. 6 includes the components of the three-state discrimination signal output means shown in FIG. 4, a second comparator 12, a second SR latch 21, a third D latch 24, a four-input AND gate 33, a fourth monostable multi-vibrator 53, and a fifth monostable multi-vibrator 54. Moreover, the four-state discrimination signal output means uses a three-input AND gate 32 instead of the three-input AND gate 36, uses the fourth monostable multi-vibrator 53 instead of the second monostable multi-vibrator 51, and includes a third inverter 42 added as an input of the four-input AND gate 33 inputting the signal to the fifth monostable multi-vibrator 54.

The voltage application instruction 'a' is output from the voltage application timing generator 1 to drive the switching element 4 through the driver circuit 2, and thus a voltage based on the power supply voltage E of the DC power supply 3 is applied to the machining gap 7. The machining gap voltage Vbb is divided into predetermined voltages by the voltage divider 8 to be input to the first and second comparators 10 and 12. The reference voltage V1 of the first comparator 10 is set to be not less than the arc voltage, and a reference voltage V2 of the second comparator 12 is set to a value lower than the power supply voltage E and considering the voltage drop of the machining gap voltage Vbb during the off time (see, FIG. 2A). Since the machining gap voltage Vbb is divided into the predetermined voltages by the voltage divider 8, the reference voltages V1 and V2 are set based on values corresponding to the division ratio.

The machining gap voltage Vbb is increased, and when the output signal 'd' of the voltage divider 8 is more than the reference voltage V1 of the first comparator 10, the output signal 'e' of the first comparator 10 is changed from low level to high level. The first SR latch 20 is then set with the output signal 'e'. Consequently, the output signal 'i' of the Q terminal of the first SR latch 20 is changed from low level to high level. Moreover, the machining gap voltage Vbb is increased, and when the output signal 'd' of the voltage divider 8 is more than the reference voltage V2 of the second comparator 12, an output signal 'q' of the second comparator 12 is changed from low level to high level, and likewise, the second SR latch 21 is set. Consequently, an output signal 'r' of a Q terminal of the second SR latch 21 is changed from low level to high level.

If the voltage application instruction 'a' from the voltage application timing generator 1 is returned to OFF, the charge accumulated in the stray capacitance C2 of the machining gap 7 remains. Therefore, the machining gap voltage Vbb is gradually reduced as long as no discharge occurs, and the output signals 'e', 'i', 'q', and 'r' are not changed.

Thereafter, when the latch instruction 'b' is output from the voltage application timing generator 1 immediately before the next voltage application instruction 'a', the output signal 'e' of the first comparator 10 is held in the second D latch 23, and the output signal 'i' of the Q terminal of the first SR latch 20 is held in the first D latch 22. Moreover, the output signal 'j' of the *Q terminal of the first D latch 22 is changed from high level to low level, and, at the same time, the first SR latch 20 is reset. According to this constitution, although the output signal 'i' of the Q terminal of the first SR latch 20 is temporarily dropped to a low level, the output of the first comparator 10 is held at a high level, and therefore the output signal 'i' of the first SR latch 20 is immediately set to return to a high level. Likewise, the output signal 'r' of the Q terminal of the second SR latch 21 is held in the third D latch 24, and, at the same time, the second SR latch 21 is reset; however, since the output of the second comparator 12 is held at a high level, the output signal 'r' is immediately set again.

The next moment, when the voltage application instruction 'a' reaches a high level, the output signal 'f' of the Q terminal of the second D latch 23 is also high level, and therefore, the output signal 'g' of the first AND gate 30 is also high level. The output signal 'g' triggers the first monostable multi-vibrator 50 to output the open signal 'h'. Meanwhile, since the output signal 't' of a *Q terminal of the second D latch 23 is low level, the output signal 'o'' of the three-input AND gate 32 is low level, and consequently, a discharge signal 'p'' is not output from the fourth monostable multi-vibrator 53. Since the output signal 'j' of the *Q terminal of the first D latch 22 is low level, the output signal 'k' of the second AND gate 31 is held at a low level, and the short signal '1' is not output from the third monos table multi-vibrator 52.

Moreover, since the open signal 'h' is high level, the inversion signal 'm' is low level. The output signal 'v' of the four-input AND gate 33 is held at a low level, and an immediate discharge signal 'w' is not output from the fifth monostable multi-vibrator 54. The reset instruction 'c' is then output simultaneously with OFF of the voltage application instruction 'a' from the voltage application timing generator 1, and the first, second, and third D latches 22, 23, and 24 are reset. The output signal 'j' of the *Q terminal of the first D latch 22 is returned to a high level, the output signal 'f' of the Q terminal of the second D latch 23 is returned to a low level, the output signal 't' of the *Q terminal is returned to a high level, and the output signal 's' of the Q terminal of the third D latch 24 is returned to a low level.

Subsequently, when discharge occurs in the machining gap 7, the machining gap voltage Vbb drops near the arc voltage at once, and the output signal 'e' of the first comparator 10 and the output signal 'q' of the second comparator 12 are returned to low levels. At that time, since the switching element 4 is already turned off, the voltage does not increase even if the discharge is terminated, and the machining gap voltage Vbb is kept at not more than the arc voltage. Thereafter, when the latch instruction 'b' is output immediately before the next voltage application instruction 'a' , the output signal 'e' of the first comparator 10 is low level; therefore, the output signal 'f' of the Q terminal of the second D latch 23 is low level, and the output signal 't' of the *Q terminal is high level. Meanwhile, since the output signal 'i' of the first SR latch 20 and the output signal 'r' of the second SR latch 21 are held at a high level, the output signal 'j' of the *Q terminal of the first D latch 22 is low level, and the output signal 's' of the Q terminal of the third D latch 24 is high level.

When the voltage application instruction 'a' then reaches a high level, the output signal 'f' from the Q terminal of the second D latch 23 and the output signal 'j' from the *Q terminal of the first D latch 22 are low level this time. Meanwhile, the output signals' from the Q terminal of the third D latch 24 and the output signal 't' from the *Q terminal of the second D latch 23 are high level. Therefore, the output signal 'g' of the first AND gate 30 and the output signal 'k' of the second AND gate 31 are low level, and only the output signal 'o'' of the three-input AND gate 32 is high level. The discharge signal 'p'' is output from the fourth monostable multi-vibrator 53.

Subsequently, the machining gap 7 is in a short state, and when the output signal 'd' of the voltage divider 8 is less than the reference voltage V1 of the first comparator 10, the output signals 'e' and 'q' from the first and second comparators 10 and 12 are held at a low level. The first and second SR latches 20 and 21 are not set, and the output signals 'i' and 'r' are held at a low level. In that case, only the output signal 'j' of the *Q terminal of the first D latch 22 and only the output signal 't' of the *Q terminal of the second D latch 23 are high level. Thus, when the voltage application instruction 'a' is high level, only the output signal 'k' of the second AND gate 31 is high level, and the short signal 'l' is output.

Moreover, by virtue of the application of voltage, the output signal 'd' of the voltage divider 8 is more than the reference voltage V1 of the first comparator 10, and the first SR latch 20 is set. Thereafter, when discharge occurs before reaching the reference voltage V2 of the second comparator 12, eventually only the output signal 't' of the *Q terminal of the second D latch 23 is high level. Therefore, the output signals 'g', 'k', and 'o'' of the first, second, and third AND gates 30, 31, and 32 are low level, and the open signal 'h', the discharge signal 'p'', the short signal '1' are not output from the first, fourth, and thirdmonostable multi-vibrators 50, 53, and 52. Thus, the respective inversion signals 'm', 'n', and 'u' of the output signals 'h', '1', and 'p' are high level, the output signal 'v' of the four-input AND gate 33 is high level, and the immediate discharge signal 'w' is output from the fifth monostable multi-vibrator 54.

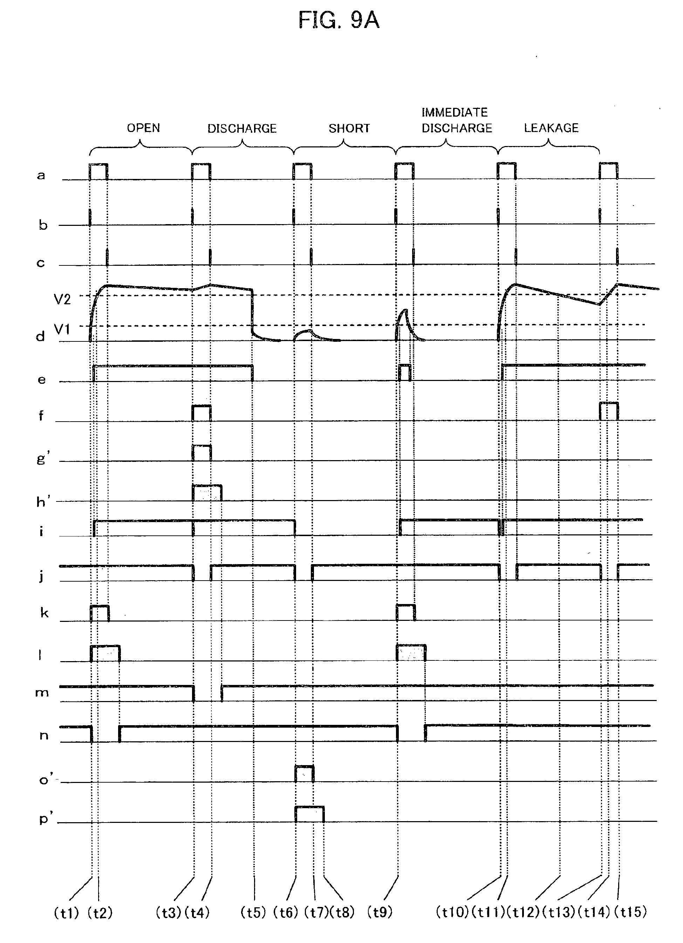

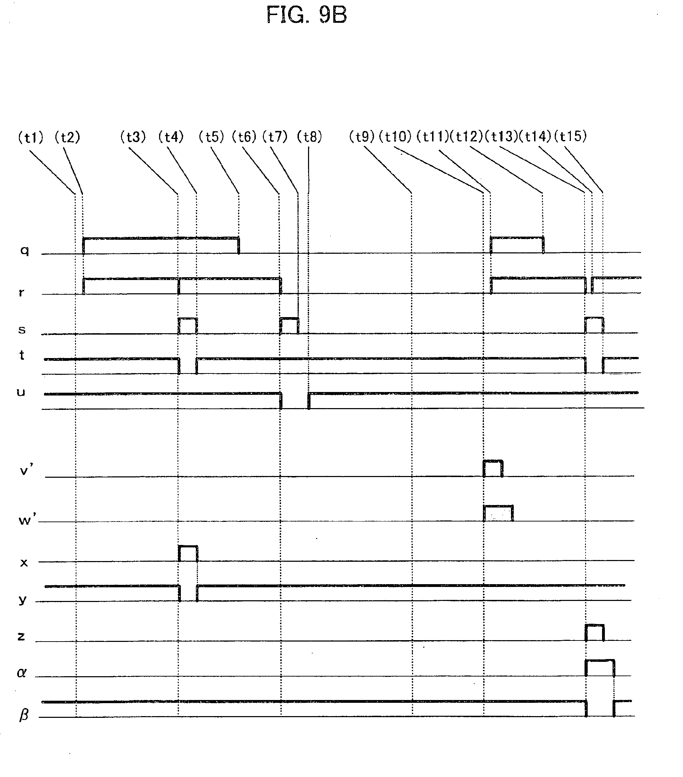

Next, five state discrimination signal output means will be described with reference to FIGS. 8, 9A, and 9B.

FIG. 8 is a view for explaining an embodiment of a wire cut electric discharge machine with the five-state discrimination signal output means. FIGS. 9A and 9B are timing charts showing the operation of the five-state discrimination signal output means shown in FIG. 8.

The five-state discrimination signal output means shown in FIG. 8 uses a fourth D latch 25, an AND gate 38, and a seventh monostable multi-vibrator 56 instead of the second D latch 23, the first AND gate 30, and the first monostable multi-vibrator 50 of the four-state discrimination signal output means shown in FIG. 6. The five-state discrimination signal output means further includes a three-input AND gate 37 and an eighth monostable multi-vibrator 57. Moreover, the five-state discrimination signal output means uses a five-input AND gate 35 and a ninth monostable multi-vibrator 58 instead of the four-input AND gate 33 and the fifth monostable multi-vibrator 54 of FIG. 6. Namely, compared with the four-state discrimination signal output means of FIG. 6, in the five-state discrimination signal output means of FIG. 8, the fourth D latch 25 holding the output signal 'q' of the second comparator 12 and a leakage signal output circuit are added, and the open discrimination circuit is changed; however, the other discrimination outputs are the same as those of the four-state discrimination signal output means. Namely, the output signal 'h'' represents an open state, 'p'' represents a discharge state, 'α' represents a leakage state, 'l' represents a short state, and 'w'' represents an immediate discharge state. Thus, with regard to the five-state discrimination signal output means, only an open state signal and a leakage state signal will be described.

The switching element 4 is turned on based on the voltage application instruction 'a' from the voltage application timing generator 1, the machining gap voltage Vbb is increased, and the output signal 'd' of the voltage divider 8 is more than the respective levels of the reference voltages V1 and V2 of the first and second comparators 10 and 12. In that case, the first and second SR latches 20 and 21 are set, and the output signal 'i' from the first SR latch 20 and the output signal 'r' from the second SR latch 21 are high level.

When that state is maintained until the next voltage application without occurrence of discharge, all D latches including the first to fourth D latches 22 to 25 set a high level signal by the output of the latch instruction 'b' immediately before the application instruction from the voltage application instruction 'a' from the voltage application timing generator 1. Consequently, the output signals 'f' , 's', and 'x' of the Q terminals of the second, third, and fourth D latches 23, 24, and 25 are high levels, and the output signals 'j', 't', and 'y' of the *Q terminals of the first, second, and fourth D latches 22, 23, and, 25 are low levels. Therefore, when the voltage application instruction 'a' is high level, only the output signal 'g'' of the AND gate 38 is high level, and the open signal 'h'' is output from the seventh monostable multi-vibrator 56.

Next, such a case is considered that the output signal 'd' from the voltage divider 8 is more than the respective levels of the reference voltages V1 and V2 of the first and second comparators 10 and 12 by virtue of the application of voltage to the machining gap 7, the output signal 'd' is then gradually reduced, and when the next latch instruction 'b' is output, the output signal 'd' is reduced to not more than the level of the reference voltage V2. The first and second SR latches 20 and 21 are set, and since the output signal 'e' of the first comparator 10 is high level, the first, second, and third D latches 22, 23, and 24 set a high level signal. However, since the output signal 'q' of the second comparator 12 is low level, only the fourth D latch 25 sets a low level signal.

Consequently, the output signal 'f' of the Q terminal of the second D latch 23, the output signal 's' of the Q terminal of the third D latch 24, and the output signal 'y' of the *Q terminal of the fourth D latch 25 are high level. Meanwhile, the output signal 'j' of the *Q terminal of the first D latch 22, the output signal 't' of the *Q terminal of the second D latche 23, and the output signal 'x' of the *Q terminal of the fourth D latch 25 are low level. When the voltage application instruction 'a' is high level, only the output signal 'z' of the AND gate 37 is high level, and the leakage signal 'α' is output from the eighth monostable multi-vibrator 57 this time.

Moreover, such a case is considered that although the output signal 'd' of the voltage divider 8 is more than the reference voltage V1 of the first comparator 10 by virtue of the application of voltage to the machining gap 7, it does not reaches the reference voltage V2 of the second comparator 12, and the next latch instruction 'b' is output while this state is maintained (in other words, a case in which the output signal 'd' is maintained between the reference values V1 and V2). In that case, the first SR latch 20 is set, and since the output signal 'e' of the first comparator 10 is high level, the first and second D latches 22 and 23 set a high level signal. However, the second SR latch 21 is not set, and since the output signal 'q' of the second comparator 12 is low level, the third and fourth D latches 24 and 25 set a low level signal.

Consequently, the output signal 'f' of the Q terminal of the second D latch 23 and the output signal 'y' of the *Q terminal of the fourth D latch 25 are high level, and the output signal 'j' of the Q terminal of the first D latch 22, the output signal 's' of the Q terminal of the third D latch 24, the output signal 't' of the *Q terminal of the second D latch 23, and the output signal 'x' of the Q terminal of the fourth D latch 25 are low level. When the voltage application instruction 'a' is high level, only the output signal 'z' of the AND gate 37 is high level again, and the leakage signal 'α' is output from the eighthmonostable multi-vibrator 57.

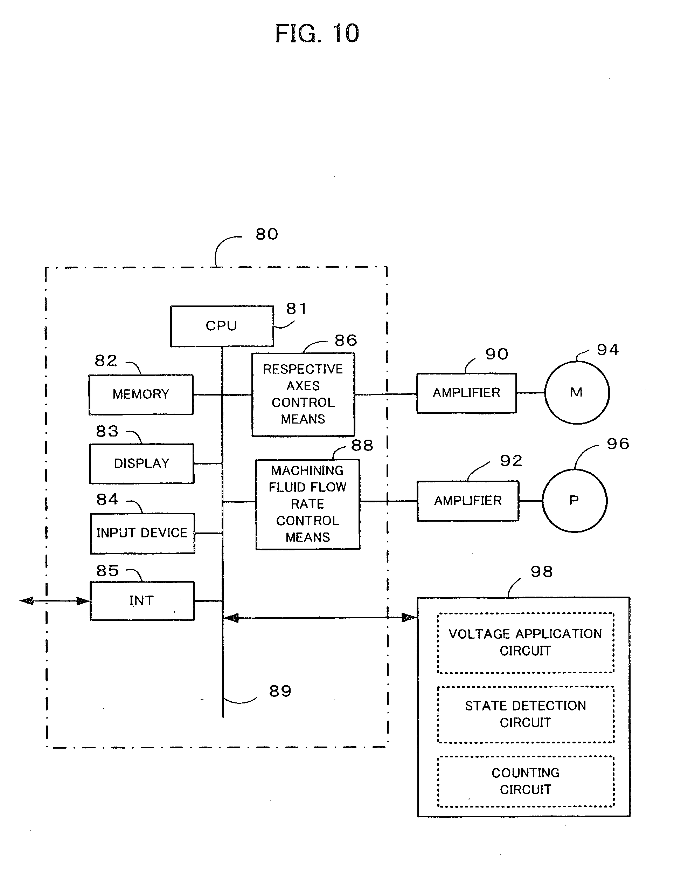

FIG. 10 is a block diagram of the relevant portion of a controller of the wire cut electric discharge machine in one embodiment of the present invention.

As shown in FIG. 10, a controller 80 includes a CPU 81, and a memory 82 constituted of a ROM and a RAM, a display 83, input device 84 such as a keyboard, an interface 85 which inputs or outputs a machining program and so on from an external storage medium, respective axe control means 86, machining fluid flow rate control means 88 that controls the flow rate of a machining fluid, and a power circuit 98, which are connected to the CPU 81 through a bus 89. A guide position of a work table and a wire electrode is controlled by the respective axes control means 86, and consequently, the position and speed of the wire electrode relative to the work table are determined.

The power circuit 98 has been described using FIGS. 4, 6, and 8 and includes a voltage application circuit that applies voltage to a machining gap, a various-state detection circuit, and a counting circuit.

The respective axes control means 86 controls motors respectively driving X, Y, Z, U, and V axes and includes feedback control means for the position of each axis (X, Y, Z, U, and V axes), the speed, and the current. In the X and Y axes, a table (not shown) on which the workpiece 7B (see, FIG. 1) is placed is driven in X-axis and Y-axis directions perpendicular to each other. In the Z axis, an upper guide is moved in a direction perpendicular to the X and Y axes. The U and V axes are used for taper machining and perpendicular to each other. The respective axes control means 86 is connected to a servo motor 94 for each axis through a servo amp 90 for each axis. The servomotors 94 each include a position/speed detector, so that position and speed are fed back to respective axis control circuits. However, the description about the feedback is omitted in FIG. 10.

The power circuit 98 transmits to the controller 80 results obtained by counting three-state discrimination signals, four-state discrimination signals, or five-state discrimination signals for a predetermined time by means of the counting circuit. In the controller 80, based on the counting result of each state transmitted from the power circuit 98, the counting is performed for a longer time if necessary to detect a trend in each state, and to obtain state discrimination data. The controller 80 compares the state discrimination data with previously-set reference data to thereby control a relative feed speed of the wire electrode 7A with respect to the workpiece 7B, control the off time of the power supply voltage, regulate the flow rate of the machining fluid, and change a set value of the positive and negative power supply voltages.

As described above, by virtue of the classification of the machining states, the machining state of the machining gap 7 can be analogized more directly and in more detail than the prior art using an average voltage. For example, even when the leakage state, number of times of discharging, or number of times of short is increased, the average voltage drops. Thus, although it is hard to determine what are the reasons from the average voltage, the reason can be clearly determined in the case of the present invention, and a suitable response can be given as described later. However, the state is frequently shifted during machining due to the influences of a vibration state of a wire and a retention state of machining sludge, and therefore, if the machining state is to be directly controlled based on individual results obtained for each voltage application, a system is vibrated to easily lose stability. Thus, it is empirically found that the machining state can be controlled better by performing a control operation based on a number of results, for example, several tens to several hundreds of results.

The examples of the control operations will be shown as follows:

·When the ratio of the "open state" is increased, it is analogized that the discharge gap is increased, and thus, the feed speed of the wire electrode is increased, or the off time is prolonged, whereby the machining amount per unit distance is reduced;
·When the "short state" is increased, on the other hand, it is analogized that the machining gap is reduced, and therefore, the feed speed of the wire electrode is reduced, and, at the same time, the off time is reduced, or the power supply voltage is increased, whereby the machining amount per unit time is increased;
·When the "leakage state" is increased, machining sludge are highly likely to be retained, and therefore, intensity of machining fluid is increased to facilitate discharge of the machining sludge;
·When the ratio of the "immediate discharge state" is increased, it is analogized that the likelihood of shifting to the "short state" is increased, and therefore, a measure upon the "short" is taken early;
·As an alternate way, the feed speed is controlled so that the ratio of the "discharge state" is always constant, whereby stable machining may be maintained.

**Claims**

1. A wire cut electric discharge machine, which applies a high-frequency voltage to a machining gap (7) between a wire electrode (7A) and a workpiece (7B), disposed at a predetermined interval from the wire electrode, to produce discharge, and to machine the workpiece, comprising:

   bipolar voltage application means (9) configured to apply a voltage (130) having alternating positive (134) and negative (136) polarities to the machining gap (7) with a period ($T_c$) of not more than 1 microsecond and an off time (132; $t_b$) between individual voltage applications of at least not less than the application time ($t_a$), such that a machining gap voltage (Vbb) has a trapezoidal wave shape;
   machining gap voltage detection means configured to detect the machining gap voltage (Vbb) generated in the machining gap (7);
   discrimination signal output means (98) configured to, based on the machining gap voltage (Vbb) detected by the machining gap voltage detection means, classify machining states into three states of "open", "discharge", and "short" for each voltage application performed by the voltage application means (9) and output a state discrimination signal corresponding to each of the states; and
   counting means (98) configured to count each of the state discrimination signals output from the discrimination signal output means (98) to obtain state discrimination data.

**2.** The wire cut electric discharge machine according to claim 1, wherein the discrimination signal output means (98) has a discrimination level whose absolute value is not more than a no-load voltage and not less than an arc voltage, and in the timing of starting the voltage application to the machining gap (7),
the discrimination signal output means (98) is configured to output an "open" signal when the absolute value of the machining gap voltage (Vbb) is not less than the discrimination level,
the discrimination signal output means (98) is configured to output a "short" signal when the absolute value has never exceeded the discrimination level since the start of the last voltage application, and
the discrimination signal output means (98) is configured to output a "discharge" signal in cases not corresponding to any of the above cases.

**3.** A wire cut electric discharge machine according to claim 1, wherein the discrimination signal output means (98) is operable to classify machining states into four states of "open", "discharge", "immediate discharge", and "short" for each voltage application performed by the voltage application means (9).

**4.** The wire cut electric discharge machine according to claim 3, wherein the discrimination signal output means (98) has two discrimination levels including high and low levels whose absolute value is not more than a no-load voltage and not less than an arc voltage, and in the timing of starting the voltage application to the machining gap (7),
the discrimination signal output means (98) is configured to output an "open" signal when the absolute value of the machining gap voltage (Vbb) is not less than the high level,
the discrimination signal output means (98) is configured to output a "short" signal when the absolute value has never exceeded the low level since the start of the last voltage application,
the discrimination signal output means (98) is configured to output a "discharge" signal when the absolute value has once exceeded the high level and is not more than the low level at the time of the next voltage application since the start of the last voltage application, and
the discrimination signal output means (98) is configured to output an "immediate discharge" signal in cases not corresponding to any of the above cases.

**5.** A wire cut electric discharge machine according to claim 1, wherein the discrimination signal output means (98) is operable to classify machining states into five states of "open", "leakage", "discharge", "immediate discharge", and "short" for each voltage application performed by the voltage application means (9).

**6.** The wire cut electric discharge machine according to claim 5, wherein the discrimination signal output means (98) has two discrimination levels including high and low levels whose absolute value is not more than a no-load voltage and not less than an arc voltage, and in the timing of starting the voltage application to the machining gap (7),
the discrimination signal output means (98) is configured to output an "open" signal when the absolute value of the machining gap voltage (Vbb) is not less than the high level,
the discrimination signal output means (98) is configured to output a "leakage" signal when the machining gap voltage (Vbb) is not more than the high level and not less than the low level,
the discrimination signal output means (98) is configured to output a "short" signal when the absolute value has never exceeded the low level since the start of the last voltage application,
the discrimination signal output means (98) is configured to output a "discharge" signal when the absolute value has once exceeded the high level and is not more than the low level at the time of the next voltage application since the start of the last voltage application, and
the discrimination signal output means (98) is configured to output an "immediate discharge" signal in cases not corresponding to any of the above cases.

**7.** The wire cut electric discharge machine according to any one of claims 1, 3, and 5, wherein the wire cut electric discharge machine is operable to compare at least one value of the state discrimination data obtained by the counting means (98) and a previously-set reference value with each other, and to change at least one of the feed speed of the wire electrode (7A), the length of the off time (132; $t_b$), the flow rate of a machining fluid, and a positive and negative power supply voltage set value of the voltage application means (9).

**Patentansprüche**

**1.** Elektrische Drahterodiermaschine, die eine Hochfrequenzspannung anlegt an eine Bearbeitungslücke (7) zwischen einer Drahtelektrode (7A) und einem Arbeitsstück (7B), angeordnet an einer vorbestimmten Entfernung von der Drahtelektrode, zum Erzeugen einer Entladung, und zum Bearbeiten des Arbeitsstücks, umfassend
bipolare Spannungsanlegemittel (9), ausgelegt zum Anlegen einer Spannung (130) mit abwechselnd positiver (134) und negativer (136) Polarität an die Bearbeitungslücke (7) mit einer Periode ($T_c$) von nicht mehr als 1 Mikrosekunde und einer Auszeit (132; $t_b$) zwischen einzelnen Spannungsanlegen von mindestens nicht geringer als die Anlegezeit ($t_a$), so dass

eine Bearbeitungslückenspannung (Vbb) eine trapezförmige Wellenform hat;

Bearbeitungslückenspannung-Erfassungsmittel, ausgelegt zum Erfassen der in der Bearbeitungslücke (7) erzeugten Bearbeitungslückenspannung (Vbb);

Diskriminationssignal-Ausgabemittel (98), ausgelegt zum, auf der Basis der vom Bearbeitungslückenspannung-Erfassungsmittel erfassten Bearbeitungslückenspannung (Vbb), Klassifizieren von Bearbeitungszuständen in drei Zustände "offen", "Entladung" und "kurz" für jede Spannungsanlage, ausgeführt durch das Spannungsanlegemittel (9), und zum Ausgeben eines Zustanddiskriminationssignals, entsprechend jedem dieser Zustände; und

Zählmittel (98), ausgelegt zum Zählen jedes der vom Diskriminationssignal-Ausgabemittel (98) ausgegebenen Zustanddiskriminationssignale zum Erhalten von Zustanddiskriminationsdaten.

2. Elektrische Drahterodiermaschine gemäß Anspruch 1, wobei das Diskriminationssignal-Ausgabemittel (98) eine Diskriminationsstufe hat, deren absoluter Wert nicht mehr als eine Leerlaufspannung und nicht geringer als eine Lichtbogenspannung ist, und im Timing vom Beginnen des Spannungsanlegens an die Bearbeitungslücke (7),

das Diskriminationssignal-Ausgabemittel (98) ausgelegt ist zum Ausgeben eines "offen"-Signals, ist der absolute Wert der Bearbeitungslückenspannung (Vbb) nicht geringer als die Diskriminationsstufe,

das Diskriminationssignal-Ausgabemittel (98) ausgelegt ist zum Ausgeben eines "kurz"-Signals, hat der absolute Wert seit dem Beginn des letzten Spannungsanlegens nie die Diskriminationsstufe überstiegen, und

das Diskriminationssignal-Ausgabemittel (98) ausgelegt ist zum Ausgeben eines "Entladung"-Signals, in Fällen, die nicht irgendeinem der oben genannten Fälle entsprechen.

3. Elektrische Drahterodiermaschine gemäß Anspruch 1, wobei das Diskriminationssignal-Ausgabemittel (98) ausführbar ist zum Klassifizieren von Bearbeitungszuständen in vier Zustände "offen", "Entladung", "sofortige Entladung" und "kurz" für jedes vom Spannungsanlegemittel (9) ausgeführte Spannungsanlegen.

4. Elektrische Drahterodiermaschine gemäß Anspruch 3, wobei das Diskriminationssignal-Ausgabemittel (98) zwei Diskriminationsstufen hat, einschließlich hohe und niedrige Stufe, deren absoluter Wert nicht mehr als eine Leerlaufspannung und nicht geringer als eine Lichtbogenspannung ist, und im Timing vom Beginnen des Spannungsanlegens an die Bearbeitungslücke (7),

das Diskriminationssignal-Ausgabemittel (98) ausgelegt ist zum Ausgeben eines "offen"-Signals, ist der absolute Wert der Bearbeitungslückenspannung (Vbb) nicht geringer als die hohe Stufe,

das Diskriminationssignal-Ausgabemittel (98) ausgelegt ist zum Ausgeben eines "kurz"-Signals, hat der absolute Wert seit dem Beginn des letzten Spannungsanlegens nie die niedrige Stufe überstiegen,

das Diskriminationssignal-Ausgabemittel (98) ausgelegt ist zum Ausgeben eines "Entladungs"-Signals, hat der absolute Wert seit dem Beginn des letzten Spannungsanlegens einmal die hohe Stufe überstiegen und ist er nicht höher als die niedrige Stufe zum Zeitpunkt des nächsten Spannungsanlegens, und

das Diskriminationssignal-Ausgabemittel (98) ausgelegt ist zum Ausgeben eines "sofortige Entladungs"-Signals, in Fällen, die nicht irgendeinem der oben genannten Fälle entsprechen.

5. Elektrische Drahterodiermaschine gemäß Anspruch 1, wobei das Diskriminationssignal-Ausgabemittel (98) ausführbar ist zum Klassifizieren von Bearbeitungszuständen in fünf Zustände "offen", "Ableitung", "Entladung", "sofortige Entladung" und "kurz" für jedes vom Spannungsanlegemittel (9) ausgeführte Spannungsanlegen.

6. Elektrische Drahterodiermaschine gemäß Anspruch 5, wobei das Diskriminationssignal-Ausgabemittel (98) zwei Diskriminationsstufen hat, einschließlich hohe und niedrige Stufe, deren absoluter Wert nicht mehr als eine .Leerlaufspannung und nicht geringer als eine Lichtbogenspannung ist, und im Timing vom Beginnen des Spannungsanlegens an die Bearbeitungslücke (7),

das Diskriminationssignal-Ausgabemittel (98) ausgelegt ist zum Ausgeben eines "offen"-Signals, ist der absolute Wert der Bearbeitungslückenspannung (Vbb) nicht geringer als die hohe Stufe,

das Diskriminationssignal-Ausgabemittel (98) ausgelegt ist zum Ausgeben eines "Entladungs"'Signals, ist die Bearbeitungslückenspannung (Vbb) nicht höher als die hohe Stufe und nicht geringer als die niedrige Stufe,

das Diskriminationssignal-Ausgabemittel (98) ausgelegt ist zum Ausgeben eines "kurz"-Signals, hat der absolute Wert seit dem Beginn des letzten Spannungsanlegens nie die geringe Stufe überstiegen,

das Diskriminationssignal-Ausgabemittel (98) ausgelegt ist zum Ausgeben eines "Entladungss"-Signals, hat der absolute Wert seit dem Beginn des letzten Spannungsanlegens einmal die hohe Stufe überstiegen und ist er nicht höher als die niedrige Stufe zum Zeitpunkt des nächsten Spannungsanlegens, und

das Diskriminationssignal-Ausgabemittel (98) ausgelegt ist zum Ausgeben eines "sofortige Entladungss"-Signals, in Fällen, die nicht irgendeinem der oben genannten Fälle entsprechen.

**7.** Elektrische Drahterodiermaschine gemäß irgendeinem der Ansprüche 1, 3 und 5, wobei die elektrische Drahterodiermaschine ausführbar ist zum Vergleichen mindestens eines Werts der vom Zählmittel (98) erhaltenen Zustanddiskriminationsdaten mit einem vorher eingestellten Referenzwert, und zum Ändern von mindestens einem aus der Zufuhrgeschwindigkeit der Drahtelektrode (7A), der Länge der Auszeit (132; $t_b$), der Flussgeschwindigkeit eines Bearbeitungsfluids, und eines eingestellten Werts einer positiven und negativen Energiezufuhrspannung des Spannungsanlegemittels (9).

## Revendications

**1.** Une machine à décharge électrique à fil de coupe qui applique une tension haute fréquence à un espace d'usinage (7) entre un fil-électrode (7A) et une pièce à usiner (7B) disposée à un intervalle prédéterminé du fil-électrode, de façon à produire une décharge et à usiner la pièce à usiner, comprenant :

un moyen d'application d'une tension bipolaire (9) configuré de façon à appliquer une tension (130) possédant des polarités positive (134) et négative (136) alternées à l'espace d'usinage (7) avec une période ($T_c$) inférieure à 1 microseconde et un temps de pause (132, $t_b$) entre applications de tension individuelles au moins pas inférieure au temps d'application ($t_a$), de sorte qu'une tension d'espace d'usinage (Vbb) possède une forme d'onde trapézoïdale, un moyen de détection d'une tension d'espace d'usinage configuré de façon à détecter la tension d'espace d'usinage (Vbb) générée dans l'espace d'usinage (7), un moyen de production d'un signal de discrimination (98) configuré, en fonction de la tension d'espace d'usinage (Vbb) détectée par le moyen de détection d'une tension d'espace d'usinage, de façon à classer des états d'usinage en trois états, à savoir "ouvert", "décharge" et "court" pour chaque application de tension exécutée par le moyen d'application de tension (9) et à produire un signal de discrimination d'état correspondant à chacun des états, et un moyen de comptage (98) configuré de façon à décompter chacun des signaux de discrimination d'état produits à partir du moyen de production d'un signal de discrimination (98) de façon à obtenir des données de discrimination d'état.

**2.** La machine à décharge électrique à fil de coupe selon la revendication 1, où le moyen de production d'un signal de discrimination (98) possède un niveau de discrimination dont la valeur absolue n'est pas supérieure à une tension à vide et n'est pas inférieure à une tension d'arc, et à l'instant de démarrage de l'application de tension à l'espace d'usinage (7), le moyen de production d'un signal de discrimination (98) est configuré de façon à produire un signal "ouvert" lorsque la valeur absolue de la tension d'espace d'usinage (Vbb) n'est pas inférieure au niveau de discrimination, le moyen de production d'un signal de discrimination (98) est configuré de façon à produire un signal "court" lorsque la valeur absolue n'a jamais dépassé le niveau de discrimination depuis le démarrage de la dernière application de tension, et le moyen de production d'un signal de discrimination (98) est configuré de façon à produire un signal de "décharge" dans les cas qui ne correspondent à aucun des cas ci-dessus.

**3.** Une machine à décharge électrique à fil de coupe selon la revendication 1, où le moyen de production d'un signal de discrimination (98) est conçu de façon à classer des états d'usinage en quatre états, à savoir "ouvert", "décharge", "décharge immédiate" et "court" pour chaque application de tension exécutée par le moyen d'application de tension (9).

**4.** La machine à décharge électrique à fil de coupe selon la revendication 3, où le moyen de production d'un signal de discrimination (98) possède deux niveaux de discrimination comprenant un niveau haut et un niveau bas dont la valeur absolue n'est pas supérieure à une tension à vide et pas inférieure à une tension d'arc, et à l'instant de démarrage de l'application de tension à l'espace d'usinage (7), le moyen de production d'un signal de discrimination (98) est configuré de façon à produire un signal "ouvert" lorsque la valeur absolue de la tension d'espace d'usinage (Vbb) n'est pas inférieure au niveau haut, le moyen de production d'un signal de discrimination (98) est configuré de façon à produire un signal "court" lorsque la valeur absolue n'a jamais dépassé le niveau bas depuis le démarrage de la dernière application de tension, le moyen de production d'un signal de discrimination (98) est configuré de façon à produire un signal de "décharge" lorsque la valeur absolue a dépassé une fois le niveau haut et n'est pas supérieure au niveau bas à l'instant de l'application de tension suivante depuis le démarrage de la dernière application de tension, et le moyen de production d'un signal de discrimination (98) est configuré de façon à produire un signal de "décharge immédiate" dans les cas qui ne correspondent à aucun des cas ci-dessus.

**5.** Une machine à décharge électrique à fil de coupe selon la revendication 1, où le moyen de production d'un signal de discrimination (98) est conçu de façon à classer des états d'usinage en cinq états, à savoir "ouvert", "fuite", "décharge", "décharge immédiate" et "court" pour chaque application de tension exécutée par le moyen d'application de tension (9).

6. La machine à décharge électrique à fil de coupe selon la Revendication 5, où le moyen de production d'un signal de discrimination (98) possède deux niveaux de discrimination comprenant un niveau haut et un niveau bas dont la valeur absolue n'est pas supérieure à une tension à vide et pas inférieure à une tension d'arc, et à l'instant de démarrage de l'application de tension à l'espace d'usinage (7),
le moyen de production d'un signal de discrimination (98) est configuré de façon à produire un signal "ouvert" lorsque la valeur absolue de la tension d'espace d'usinage (Vbb) n'est pas inférieure au niveau haut,
le moyen de production d'un signal de discrimination (98) est configuré de façon à produire un signal de "fuite" lorsque la tension d'espace d'usinage (Vbb) n'est pas supérieure au niveau haut et pas inférieure au niveau bas,
le moyen de production d'un signal de discrimination (98) est configuré de façon à produire un signal "court" lorsque la valeur absolue n'a jamais dépassé le niveau bas depuis le démarrage de la dernière application de tension,
le moyen de production d'un signal de discrimination (98) est configuré de façon à produire un signal de "décharge" lorsque la valeur absolue a dépassé une fois le niveau haut et n'est pas supérieure au niveau bas à l'instant de l'application de tension suivante depuis le démarrage de la dernière application de tension, et
le moyen de production d'un signal de discrimination (98) est configuré de façon à produire un signal de "décharge immédiate" dans les cas qui ne correspondent à aucun des cas ci-dessus.

7. La machine à décharge électrique à fil de coupe selon l'une quelconque des revendications 1, 3 et 5, où la machine à décharge électrique à fil de coupe est conçue de façon à comparer entre elles au moins une valeur des données de discrimination d'état obtenues par le moyen de comptage (98) et une valeur de référence définie antérieurement, et à modifier au moins un paramètre parmi la vitesse d'alimentation du fil-électrode (7A), la durée du temps de pause (132, $t_b$), le débit d'écoulement d'un fluide d'usinage et une valeur définie de tension d'alimentation électrique positive ou négative du moyen d'application de tension (9).

FIG. 1

FIG. 2A  POWER SUPPLY OUTPUT VOLTAGE

FIG. 2B  MACHINING GAP VOLTAGE

EP 2 269 755 B1

FIG. 3A  TRAPEZOIDAL WAVE SHAPED VOLTAGE
(PRESENT INVENTION)

O(V)

TIME

1 PERIOD | 1 PERIOD | 1 PERIOD | 1 PERIOD | 1 PERIOD

FIG. 3B  AC HIGH-FREQUENCY VOLTAGE
(PRIOR ART)

O(V)

TIME

EP 2 269 755 B1

# FIG. 4

# FIG. 5

# FIG. 6

# FIG. 7A

FIG. 7B

# FIG. 8

# FIG. 9A

EP 2 269 755 B1

FIG. 9B

26

# FIG. 10

FIG. 11A   POWER SUPPLY OUTPUT VOLTAGE

100

POSITIVE
VOLTAGE

0 (V)

NEGATIVE
VOLTAGE

TIME

FIG. 11B   MACHINING GAP VOLTAGE

102

0 (V)

TIME

EP 2 269 755 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 61260915 A
- JP W2004022275 B

- JP 2002254250 A